# EUROPEAN PATENT APPLICATION

(11) **EP 3 069 946 A1**
(43) Date of publication of application: **21.09.2016**
(21) Application number: 15159980.0
(22) Date of filing: 20.03.2015
(51) Int. Cl.: B60T 7/08, B60T 15/04

(54) **Control circuit for electronically controlled parking brake**

(71) Applicant: KNORR-BREMSE Systeme für Nutzfahrzeuge GmbH, 80809 München (DE)
(72) Inventor: Balogh, Levente, 2310 Szigetszentmiklos (HU); Doczi, Levente, 8164 Balatonfökajar (HU)

(57) **Abstract**

The invention consists of a control circuit for an electronically controlled parking brake (2) for a commercial vehicle (1). The parking brake (2) can be permanently locked to secure a standing vehicle, or temporarily applied to decelerate the vehicle. The control circuit guards against improper manual application of the parking brake (2): Keeping a tally on the temporary usage by means of a usage monitor (7) and alerting the vehicle operator with means (8), e.g. by force feedback (8a) on the human-machine interface device or (8b) on the braking force output (BF), prevents overuse of the parking brake (2) with excessive wear. A safety circuit (9) with interlocks prevent accidental permanent locking of the parking brake (2).

## Description

The invention relates to a control circuit for an electronically controlled parking brake for a commercial vehicle.

### State of the art

Parking brakes were originally meant to keep a parked vehicle from rolling away on its own, and to be disengaged while the vehicle is running. This has two main drawbacks: They are used very rarely, so they degrade early. When the vehicle is running, they are dead weight that does not serve to control the vehicle.

Like almost every other vehicle system, parking brakes can be electronically controlled. By modifying this control, the parking brakes can not only be permanently locked to secure a standing vehicle. They can also be used as additional brakes to decelerate a running vehicle. As opposed to the permanent locking of the parking brake, which persists when the vehicle is turned off, the temporary application requires constant power to keep up, and is released when power is disconnected.

Systems of this kind are disclosed in WO 2011/039556 A1 and WO 2011/039558 A1. Using a single operating lever, the user can choose whether a braking force proportional to the lever position shall be applied or whether the parking brake shall be permanently locked.

These parking brakes are prone to two kinds of improper use: In a scary situation, the vehicle operator may overreact and pull the lever too far, suddenly activating the parking brake permanently with full force when he is not supposed to do so and losing control of the vehicle. Mechanisms to avoid this, like the one disclosed in WO 2011/039558 A1, make the intentional permanent locking of the parking brake more complicated and make it difficult for the driver to distinguish whether a standing vehicle is being held by temporarily applied parking brakes or by permanently applied parking brakes. It is safe for the driver to leave the cab only in the latter case.

The vehicle operator may also use the parking brake as a convenient alternative to the vehicle service brake too often, subjecting it to unnecessary wear.

### Object of the invention

It is the object of the invention to guard against both kinds of improper use by improving the safety against inadvertent or missed locking of the parking brake and by deterring an overuse of the parking brake as a replacement for the service brake.

To this end, the invention provides a control circuit according to independent Claim 1. The dependent Claims detail further advantageous embodiments.

### Disclosure of the invention

The invention consists of a control circuit for an electronically controlled parking brake for a commercial vehicle. This control circuit is configured at least to command a permanent locking of the parking brake or a temporary application of the parking brake, preferably with a lesser force and most preferably with a force that does not lock the vehicle wheels.

The term "permanent" means in this context that application of the parking brake in this mode persists even if the vehicle is turned off and all power is cut. Permanent application of the parking brake is meant to secure a standing vehicle. By contrast, the term "temporary" means that application of the parking brake in this mode requires a constant supply of power to keep up. Temporary application of the parking brake is meant to decelerate the vehicle, as a supplement or as a replacement to the service brake. If the parking brake is applied only temporarily, it is released when the vehicle is turned off and power is cut.

Preferably, the electronic control unit may receive an input to command permanent or temporary application of the parking brake, and translate this input into a braking force output to be applied to the parking brake. It may preferably comprise a drive unit that applies the parking brake with a force according to the braking force output. The input to the electronic control unit may be preferably provided by a human-machine interface device, but may also be provided by any other vehicle control system. The electronic control unit may be integrated into a control unit of said other vehicle control system. Examples for vehicle control systems include anti-skid systems, electronic stability systems, brake assist systems or cruise control systems.

According to the invention, the control circuit has either one of the following two improvements, or a combination of both improvements:
- The control circuit has a usage monitor that is adapted to record a tally of the usage of the parking brake during driving, and it further comprises means to alert the vehicle operator if said usage exceeds a pre-set level. Preferably, the usage of the parking brake during driving that increments the tally is a temporary application of the parking brake.
- The control circuit has a safety circuit that is interlocked to require additional vehicle operator action and/or conditions relating to the operating state of the vehicle and/or certain readings of vehicle sensor values to allow permanent locking of the parking brake.

Specifically, the control circuit may be adapted to require that (a) the human-machine interface device is in a distinct parking position or range that commands permanent locking of the parking brake, and (b) interlock conditions based on the actual current state of the vehicle are fulfilled, before it allows permanent locking of the parking brake. Preferably, only the current position of the human-machine interface is taken into account for this decision, regardless of the previous movement history of this device. Thus, the driver does not have to follow a specific parking brake activation sequence, which may result in an only temporary activation of the parking brake if he omits or fails a step. There is also no delay between the movement of the human-machine interface device to the parking position and the beginning of the permanent parking brake activation.

When a parking brake is applied with less force than is necessary to lock the wheels, it slides against the wheel while being pushed by a force towards the wheel. Therefore, there is friction between the parking brake and the wheel, which grinds material from the parking brake and causes it to heat up. While a certain dosage of such use can be regarded as a training program that extends the life of the parking brake, an excessive use of the parking brake as a replacement for the service brake will cause excessive wear. This increases maintenance costs.

The usage monitor according to the invention enables the parking brake to be used as a supplement to the service brake in an optimal way. The parking brake comes in handy in situations where the demand for braking power is at its peak. Most of the braking work, however, is still done by the service brake, which was specifically built to dissipate large amounts of kinetic energy over a long time.

The safety circuit guards against the operator locking the wheels with the parking brake in situations where he only meant to increase braking power for an emergency stop. The purpose of increasing the brake power is to stop as fast as possible and avoid a collision. If the parking brake is permanently locked, this causes the opposite effect: The vehicle goes into a skid, vastly increasing the distance required for stopping because the dynamic friction between the wheels and the ground is much lower than the static friction. With locked wheels, dodging an obstacle is no longer possible. Because parking brakes are actuated by mechanisms completely different from service brakes, it is not possible to integrate them into the vehicle's antilock system. In addition, parking brakes usually act on the rear axles only, so the loss of lateral force on the rear wheels due to the skid may jeopardize the stability of the vehicle altogether.

The safety circuit eliminates the need for mechanisms that complicate the intentional permanent application of the parking brake. The important distinction whether the parking brake has been only temporarily or permanently applied is easier for the driver. The risk that the parking brake is released after the driver has left the cab because the brake had only been temporarily applied is greatly reduced.

Advantageously, the human-machine interface device is at least adjustable from a neutral position through a range where the input to the electronic control unit corresponds to a request for an increasing braking force to a position where the input to the electronic control unit corresponds to a request for a permanent locking of the parking brake. To this end, the human-machine interface device may, for example, be a lever that can be adjusted by sliding, pushing or pulling, or a wheel that can be adjusted by turning. In addition, the human-machine interface device may also have a position that causes the parking brake to be released. The neutral position is then preferably between the release position and the range where the braking force increases. Beyond the position that corresponds to a permanent locking of the parking brake, the interface device may have positions that increase the braking force even more to secure the vehicle at a steep grade or to compensate for failed trailer brakes.

Preferably, the human-machine interface device is adjustable against a mechanical retaining force that increases with the distance from the neutral position. This enables the vehicle operator to feel the position of the interface device with his hand without having to look at the device (e.g., lever or wheel). The additional braking functionality does not distract the vehicle operator from the road.

Preferably, the transition from the range where the braking force increases to the position that corresponds to a permanent locking of the parking brake is guarded by a discontinuous increase in the retaining force. This warns the vehicle operator that the brakes are going to enter a different regime, so that he should check whether this is appropriate in the current situation. If permanent application of the parking brake is really intended and appropriate, the increase in retaining force is a confirmation to the driver that the brake will stay applied when power is turned off to the vehicle, so that it is safe for the driver to leave the cab.

Preferably, the usage monitor and/or the safety circuit are implemented into the electronic control unit. They then require little additional hardware and can be updated online without bringing the vehicle to a mechanical workshop. Alternatively or in combination, the usage monitor and/or the safety circuit can be implemented mechanically. The usage monitor may, for example, comprise a reservoir that fills up with compressed air whenever the parking brake is used as a service brake; the pressure in the reservoir can then be used to actuate the alerting means. A high vehicle speed or other vehicle condition that makes permanent locking of the parking brake inappropriate may trigger the mechanical engagement of a locking pin or the actuation of a valve in order to inhibit the permanent locking of the parking brake. Having mechanical devices of this kind at least as a fallback position improves safety in case of a problem with the electronic control unit.

In a specially advantageous embodiment of the invention, the alerting means comprise a force feedback mechanism. This force feedback may act on the human-machine interface device, for example, by increasing or oscillating the retaining force against which this device is operated, or by shaking this device akin to the stall warning on an aircraft. Alternatively or in combination, the force feedback mechanism can also alter the translation ratio between the input from the human-machine interface device and the braking force output. This can be used to make the braking with the parking brake increasingly uncomfortable, persuading the vehicle operator to use the service brake instead.

To this end, the force feedback mechanism is preferably adapted to steepen an increase of the braking force output as a function of an increasing braking force input from the human-machine interface device. A slight actuation of the human-machine interface device will then cause the driver to experience the braking as unexpectedly harsh. This steepening preferably depends on the recorded tally and/or on the braking force command supplied as input to the electronic control unit. For example, to emphasize the unexpectedly harsh braking force for low actuations, the braking force can increase much more steeply with the braking force input for low braking force inputs than it does for higher braking force inputs. The dependence on the recorded tally can be used to progressively increase the discomfort to the vehicle operator.

Advantageously, the tally of the usage is a measure for the wear on the parking brake induced by this usage and/or a measure for the temperature of the parking brake. The use of the parking brake as a supplement to the service brake can then be tailored exactly to the acceptable amount.

The safety circuit can be adapted to record the vehicle velocity and inhibit permanent locking of the parking brake if this velocity exceeds a pre-set level. For example, a permanent locking of the parking brake can only be allowed if the vehicle is stationary or close to stationary. This prevents permanent locking of the parking brake in situations where this could cause loss of control over the vehicle.

Alternatively or in combination, the safety circuit may be further interlocked to require one or more of the following before it allows permanent locking of the parking brake:
- actuation of the human-machine interface device across a feelable resistance threshold. This reminds the vehicle operator to make sure that he really means to permanently lock the parking brake;
- actuation of a separate mechanical interlock and/or electronic interlock switch by the vehicle operator. The mechanical interlock may, for example be integrated into the human-machine interface device, so that the vehicle operator feels that he is literally running into a wall when he tries to permanently lock the parking brakes and the mechanical interlock inhibits this;
- application of the brake pedal, to make sure that the parking brake is not accidentally permanently locked, e.g., by hitting the human-machine interface device in a situation where the vehicle operator did not mean to brake at all;
- an inactive state of the accelerator and/or clutch pedal, which are in frequent use during normal driving,
- a neutral state of the gear selector, because the gear selector is very rarely in this state during normal driving;
- an engine speed below a pre-set level.

The signals received from the human-machine interface (handle) device and other parts of the vehicle may be directly wired signals. They may also be transferred over a vehicle communication bus, so that each component in the vehicle needs only one wiring to the bus.

The translation ratio between the input from the human-machine interface device and the braking force output may be statically programmed, but it may also be set dynamically, e.g., to implement a force feedback mechanism or to take account of other special situations of the vehicle.

Alternatively or in combination with a force feedback, the alerting means can, for example, comprise a warning light and/or a warning noise in the cabin of the vehicle.

### Description of the drawings

In the following, the invention is illustrated using figures without limiting the scope of the claimed invention. The following figures are presented:
- Fig. 1:: Block diagram of a control circuit according to the present invention.
- Fig. 2:: Dependence of the retaining force F_{R} against which the human-machine interface device lever is actuated on the lever position (a); illustration of different braking regimes traversed by the lever (b).
- Fig. 3: Flow-chart of the decision process whether the parking brake is to be permanently locked or whether it is to be operated as a supplement to the service brake.
- Fig. 4:: Force feedback by means of the braking force output according to the present invention.

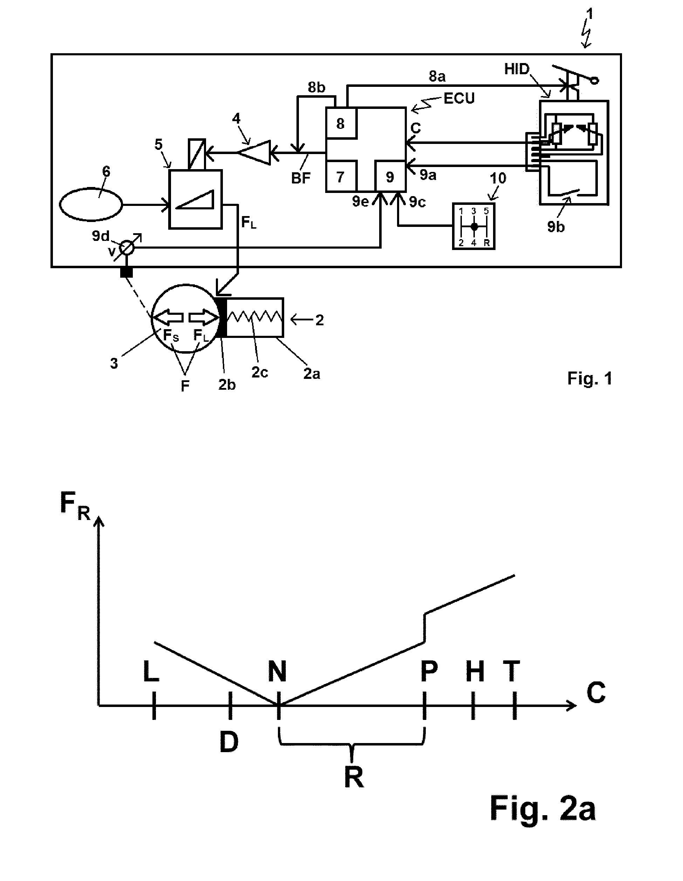

Fig. 1 is a block diagram of an embodiment of the control circuit according to the present invention. The control circuit is disposed on a commercial vehicle 1 running on wheels 3, of which only one is drawn for clarity. The wheel 3 is braked by a service brake (not shown in Fig. 1) and by a parking brake 2. The parking brake 2, which is used mostly when the vehicle is turned off, is a spring-loaded brake. It comprises a brake shoe 2b that is disposed within a brake cylinder 2a and pushed against a corresponding surface on or in the wheel 3 by means of a spring 2c. The spring exerts a force F_{S} on the brake shoe 2b. To release the parking brake 2, the brake shoe 2b can be removed from the surface on or in the wheel 3 and moved back inside the brake cylinder 2a against the spring 2c by introducing an air pressure into the brake cylinder 2a. This results in a force F_{L} that counteracts the force F_{S} of the spring. The resulting force is the braking force F.

The parking brake is controlled by the vehicle operator using a human-machine interface device HID. To command application of the parking brake, the vehicle operator actuates a lever at the top of the HID that alters the electrical resistance of potentiometers within the HID. A voltage or current signal C is sent as an input to the electronic control unit ECU. The control unit ECU translates this input C into a brake force output BF. This brake force output BF is fed into a drive unit (4, 5, 6) that applies the braking force F. The drive unit has an amplifier 4 that actuates the solenoid of a proportional relay valve 5. The relay valve 5 supplies the brake cylinder 2a with a pressure drawn from a compressed air reservoir 6 that is proportional to the current through the solenoid. The pressure provides the releasing part F_{L} of the braking force F. If this releasing part F_{L} is zero, the applied braking force F is the full force F_{S} of the spring 2c.

The control unit ECU has a usage monitor 7 that increments a tally of the usage whenever the parking brake 2 is operated during driving. If this tally exceeds a pre-set level, the alerting means 8 in the control unit ECU are engaged. The alerting means comprise a force feedback 8a on the human-machine interface device HID lever, which vibrates (shakes) in the hand of the vehicle operator. The alerting means 8 also comprise a force feedback 8b that acts on the braking force output BF. If this force feedback is active, the brake force output BF increases much more steeply with an increasing input C. The driver experiences the braking as unexpectedly harsh, which provides a feelable reminder to him that he is overusing the parking brake. The electronic control unit ECU also comprises a safety circuit 9 that checks a number of conditions before allowing the parking brake 2 to lock permanently. First, it requires that the vehicle operator actuates an additional switch 9b on the human-machine interface device HID. Closing this switch energizes the input 9a on the safety circuit 9.

The sensor 9d monitors the vehicle velocity v. This velocity is fed to port 9e of the safety circuit 9. If the velocity v exceeds a pre-set value, permanent locking of the parking brake 2 is inhibited.

The safety circuit 9 also monitors the position of the gear 10. Permanent locking of the parking brake 2 is only possible if the gear 10 reports to the port 9c of the safety circuit 9 that it is in the neutral position.

Thus, proportional operation of the parking brake 2 during driving is always possible at the price of incrementing the tally in the usage monitor 7. Permanently locking the parking brake 2 and therefore the wheel 3 is only possible if the vehicle 1 is in a safe state to do so.

The human-machine interface device HID lever must be actuated against a retaining force F_{R}. Fig. 2a illustrates the dependence of this retaining force F_{R} on the input C that corresponds to the lever position. The lever has a neutral position N, in which no retaining force is present. The retaining force F_{R} increases when the lever is moved in either direction from this neutral position. The lever can be moved to the left. When it reaches position D, the parking brake is induced to be released. The more the lever is moved to the left, the faster the parking brake is released. The lever can be moved to the left until it reaches the point L.

If the lever is moved to the right from the neutral position, it enters the range R where the input C corresponds to a request for an increasing braking force. The retaining force increases linearly as well. The braking force BF is proportional to the input (lever movement) C. At point P, temporary proportional activation of the parking brake gives way to permanent locking of the parking brake. This point is guarded by a discontinuous increase in the retaining force F_{R} to prevent inadvertent permanent locking of the parking brake. Once this guarded point has been passed, the retaining force increases again linearly with the distance from the neutral position, with the same slope as in the range R. The lever can be moved further to the right to increase the force of the hold between the brake 2 and the wheel 3. It can be moved to point H if a higher holding force is needed, for example, to secure the vehicle at a steep slope. The lever can be moved further to the right to point T for a maximum holding force that is typically needed only if a failure of trailer brakes is to be compensated.

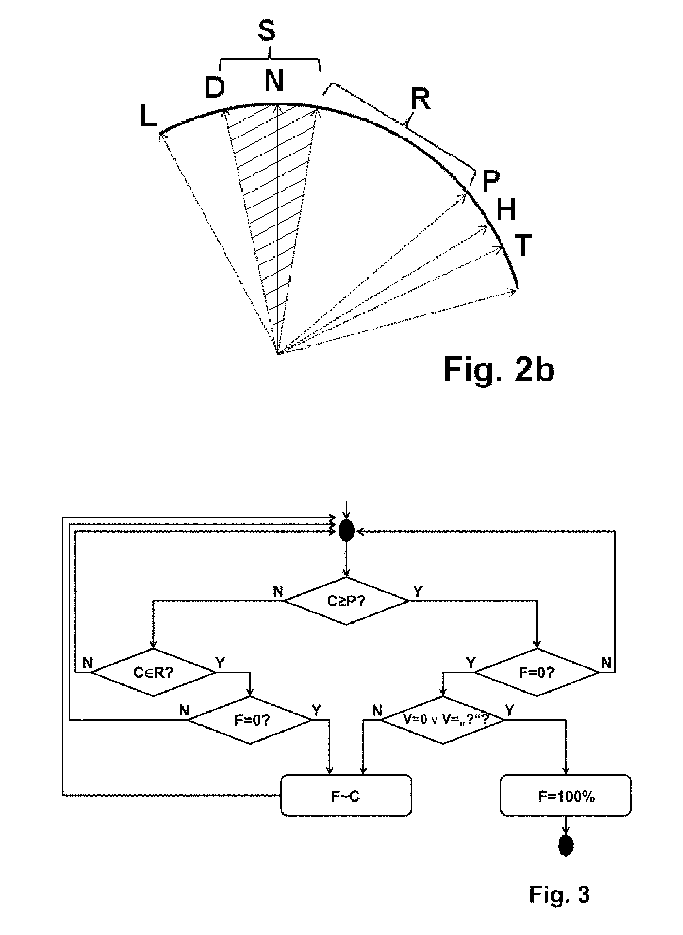

Fig. 2b illustrates the same movement of the lever in a different view that emphasizes the rotation of the lever around an anchoring point, as is typical for controls of vehicles in the form of levers. Between the neutral position in the middle, the release point D and the start of the range R, a safety zone S has been added to prevent an accidental engagement or release of the parking brake if the lever is inadvertently dislodged from its middle position by a slight amount.

Fig. 3 illustrates the decision whether the parking brake is to be permanently locked or whether it is to be applied temporarily with a lesser force in reaction to an operator event at the human-machine interface device HID. A Yes decision is always denoted by a Y, a No decision is always denoted by an N. The first question is how far the lever has been pulled to the right. If the lever has been pulled to or beyond point P, this is deemed as a command from the vehicle operator that the parking brake is to be permanently locked. For safety, it is first checked whether the parking brake is released, which is equivalent with the total braking force F being zero. If F is not zero, application of the parking brake is aborted. If the command to permanently lock the parking brake comes in a released state of the parking brake, it is further checked whether the vehicle is standing, which is equivalent to its velocity being zero. If the velocity is zero (or below a certain tolerance threshold) or if the velocity is unknown because of a sensor failure, the parking brake is permanently locked, so the braking force F is 100% of its normal holding force. If the vehicle is not standing, a lower force is applied that does not lock the wheel. It is therefore avoided that the parking brake is inadvertently permanently locked during fast motion of the vehicle, causing the vehicle to become uncontrollable.

If the lever has not been pulled to the right as far as point P, it is checked whether it is within the range R. If this is not the case, the lever is within the safety zone S, and application of the parking brake is aborted. If the lever is within the range R, it is again checked whether the parking brake is currently in a released state (F=0). This provides a safety against an inadvertent change in the braking force and also discourages the vehicle operator from using the parking brake too much instead of the service brake; every change from one amount of braking force F to another amount is only possible by completely releasing the parking brake first.

If the command to apply a braking force within the range R comes in a released state of the parking brake, a braking force F that is proportional to the input (lever movement) C is applied.

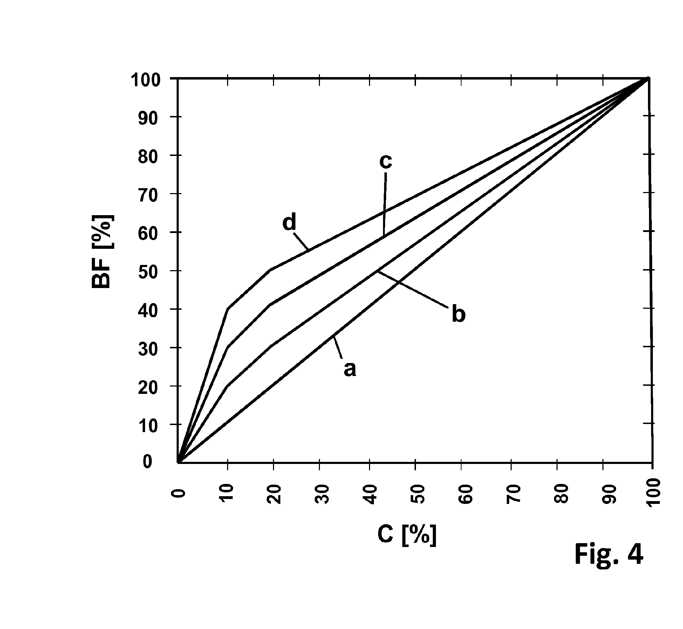

Fig. 4 illustrates the force feedback 8b on the braking force BF. The dependence of the braking force BF on the input (lever position) C is illustrated without active force feedback 8b (curve a), as well as with increasing amounts of force feedback 8b active (curves b to d). The force feedback is realized by steepening the increase of the braking force BF with the increase in the input C. This steepening is particularly high for inputs C smaller than 10% of the maximum input. Therefore, the driver experiences the braking as unexpectedly harsh, causing irritation and discomfort to the vehicle operator as a reminder not to overuse the parking brake. The steepening ends at an input of 10%; from then on, the braking force increases with the input C with the same slope as if no force feedback 8b were active. For commands higher than 20%, the steepening is reversed. This is to elicit the braking force BF to reach 100% of its maximum value for an input C of 100% regardless of whether the force feedback 8b has been active.

### List of reference numerals

- 1: commercial vehicle
- 2: electronically controlled parking brake
- 3: wheel
- 4: amplifier
- 5: proportional relay valve
- 6: compressed air reservoir
- 4,5,6: drive unit
- 7: usage monitor
- 8: alerting means
- 8a: force feedback on human-machine interface device HID
- 8b: force feedback on the braking force output BF
- 9: safety circuit
- 9a: input port for safety switch 9b
- 9b: safety switch on human-machine interface device HID
- 9c: input port for position of gear 10
- 9d: sensor for vehicle velocity v
- 10: gear
- BF: brake force output of electronic control unit ECU
- C: brake command from human-machine interface device HID
- D: release position of HID lever
- F: braking force
- F_{R}: retaining force in human-machine interface device HID
- ECU: electronic control unit
- H: position of HID lever with higher locking force
- HID: human-machine interface device
- L: left limit for position of HID lever
- N: neutral position of HID lever
- P: permanent locking (parking) position of HID lever
- R: range of HID lever position where braking force increases
- S: safety zone for HID lever position
- T: position of HID lever with maximum holding force
- v: vehicle velocity

## Claims

1. Control circuit for an electronically controlled parking brake (2) for a commercial vehicle (1), said control circuit being configured at least to command a permanent locking of the parking brake (2) or a temporary application of the parking brake (2),
**characterized in that**
• the control circuit has a usage monitor (7) that is adapted to record a tally of the usage of the parking brake during driving, and that the control circuit comprises means (8, 8a, 8b) to alert the vehicle operator if said usage exceeds a pre-set level, and/or
• the control circuit has a safety circuit (9) that is interlocked to require additional vehicle operator action (9a, 9b) and/or conditions (9c) relating to the operating state (10) of the vehicle and/or certain readings of vehicle sensor (9d) values (9e) to allow permanent locking of the parking brake.

2. Control circuit according to Claim 1, **characterized in that** the electronic control unit (ECU) receives an input (C) to command permanent or temporary application of the parking brake, and translates this input (C) into a braking force output (BF) to be applied to the parking brake (2).

3. Control circuit according to Claim 2, **characterized in that** it comprises a drive unit (4, 5, 6) that applies the parking brake (2) with a force (F) according to the braking force output (BF).

4. Control circuit according to any one of Claims 2 to 3, **characterized in that** it comprises a human-machine interface device (HID) that provides the input (C) to the electronic control unit (ECU).

5. Control circuit according to Claim 4, **characterized in that** the human-machine interface device (HID) is at least adjustable
• from a neutral position (N)
• through a range (R) where the input to the electronic control unit corresponds to a request for an increasing braking force
• to a position (P) where the input to the electronic control unit corresponds to a request for a permanent locking of the parking brake.

6. Control circuit according to Claim 5, **characterized in that** the human-machine interface device (HID) is adjustable against a mechanical retaining force (F_{R}) that increases with the distance from the neutral position (N).

7. Control circuit according to Claim 6, **characterized in that** the transition from the range (R) where the input to the electronic control unit corresponds to a request for an increasing braking force to the position (P) that corresponds to a permanent locking of the parking brake is guarded by a discontinuous increase in the retaining force (F_{R}).

8. Control circuit according to any one of Claims 1 to 7, **characterized in that** the usage monitor (7) and/or the safety circuit (8) are implemented into the electronic control unit (ECU).

9. Control circuit according to any one of Claims 1 to 8, **characterized in that** the alerting means (8) comprise a force feedback mechanism (8a) acting on the human-machine interface device (HID) and/or a force feedback mechanism (8b) that alters the translation ratio between the input from the human-machine interface device (HID) and the braking force output.

10. Control circuit according to Claim 9, **characterized in that** the force feedback mechanism is adapted to steepen an increase of the braking force output (BF) as a function of an increasing braking force input (C) from the human-machine interface device (HID).

11. Control circuit according to Claim 10, **characterized in that** the amount of said steepening depends on the recorded tally and/or on the braking force input (C).

12. Control circuit according to any one of Claims 1 to 11, **characterized in that** said tally is a measure for the wear on the parking brake (2) induced by said usage and/or a measure for the temperature of the parking brake (2).

13. Control circuit according to any one of Claims 1 to 12, **characterized in that** said safety circuit is adapted to record the vehicle velocity (v) and inhibit permanent locking of the parking brake (2) if said velocity (v) exceeds a pre-set level.

14. Control circuit according to any one of Claims 1 to 13, **characterized in that** said safety circuit is further interlocked to require
• actuation of the human-machine interface device (HID) across a feelable resistance threshold (P), and/or
• actuation of a separate mechanical interlock and/or electronic interlock switch (9b) by the vehicle operator and/or
• application of the brake pedal, and/or
• an inactive state of the accelerator and/or clutch pedal, and/or
• a neutral state of the gear selector (10)
• an engine speed below a pre-set level
to allow permanent locking of the parking brake (2).
